# EUROPÄISCHE PATENTSCHRIFT

(11) **EP 1 777 114 B1**
(45) Veröffentlichungstag und Bekanntmachung des Hinweises auf die Patenterteilung: **10.12.2008**
(21) Anmeldenummer: 06016786.3
(22) Anmeldetag: 11.08.2006
(51) Int. Cl.: B60R 13/02, B60R 5/04

(54) **Innenausbauteil für ein Kraftfahrzeug**
Trim element for a vehicle
Élément de revêtement intérieur pour un véhicule

(30) Priorität: 20.10.2005 DE 102005050242
(43) Veröffentlichungstag der Anmeldung: 25.04.2007
(73) Patentinhaber: Dr. Ing. h.c. F. Porsche Aktiengesellschaft, 70435 Stuttgart (DE)
(72) Erfinder: Gocht, Helmut, 71297 Mönsheim (DE); Bühner, Roland, 70736 Fellbach-Schmiden (DE); Wilkinson, Andrew, 71263 Weil der Stadt (DE)

(56) Entgegenhaltungen:
- EP-A1- 1 106 440
- DE-A1- 19 709 016
- GB-A- 2 173 456

## Beschreibung

Bei der Erfindung wird ausgegangen von einem Innenausbauteil, insbesondere Innenverkleidungsteil, für ein Kraftfahrzeug, gemäß Oberbegriff des Patentanspruchs 1.

Ein gattungsbildendes Innenausbauteil ist aus der EP 44 36 64 A2 bekannt. Es umfasst einen geschäumten Grundkörper (Kernschicht), in dem ein geschäumtes Verstärkungseinsatzteil angeordnet ist, das eine gegenüber dem Grundkörper höhere Dichte aufweist. Das örtlich vorgesehene Verstärkungseinsatzteil dient als Befestigungsstelle für Schrauben bzw. Beschläge. Zusätzlich wird auf den Grundkörper noch eine faserverstärkte Deckschicht aufgebracht, die dem Innenausbauteil ein gewisse Steifigkeit verleiht.

Aus der EP 1 106 440 A1 ist ein Himmel für ein Fahrzeugdach bekannt, der einen Grundkörper mit einer verfestigten Schaumstoffschicht aufweist. Der Grundkörper umfasst weiterhin zwei Glasfaserschichten, so dass eine im Wesentlichen nicht biegbare Grundstruktur gebildet ist. In diese Grundstruktur sind zwei Einschnitte eingebracht und das dazwischen liegende Zwischenstück ist entfernt. Der so geschaffene Freiraum in der Grundstruktur wird mit einem Material gefüllt, das elastisch und komprimierbar ist sowie Rückstellkräfte aufweist.

In der DE 102 53 825 A1 ist für ein Kraftfahrzeug ein Innenausbauteil beschrieben, das als Verkleidungs- oder Anbauteil ausgeführt sein kann. Es besteht aus einem geschäumten Grundkörper, auf den eine äußere Verstärkungsschicht aufgebracht wird.

Aufgabe der Erfindung ist es, ein Innenausbauteil, insbesondere Innenverkleidungsteil, der eingangs genannten Art anzugeben, das eine ausreichende Stabilität bzw. Steifigkeit aufweist, einfach an dem Kraftfahrzeug befestigt werden kann und eine Zusatzfunktion aufweist.

Gelöst wird diese Aufgabe mit einem Innenausbauteil, welches die in Anspruch 1 genannten Merkmale aufweist. Ausgestaltungen der Erfindung sind in den Unteransprüchen angegeben.

Die mit der Erfindung hauptsächlich erzielten Vorteile sind darin zu sehen, dass sich der Grundkörper aus dem biegbaren Weichschaumteil biegen bzw. in gewissem Maße knicken lässt, wodurch das zumindest eine Hintergriffselement in Eingriff mit dem Kraftfahrzeug gebracht werden kann, um das Innenausbauteil am Kraftfahrzeug zu befestigen. Dadurch, dass die Verstärkungseinsatzteile mit Abstand zueinander liegen, wird das vorstehend erwähnte Biegen bzw. Knicken des Grundkörpers ermöglicht, da die Verstärkungseinsatzteile nicht durchgehend im Grundkörper vorhanden sind. Dennoch verleihen die Verstärkungseinsatzteile dem Grundkörper eine gewisse Steifigkeit bzw. Stabilität, so dass sich das Innenausbauteil auch in vorteilhafter Weise für relativ großflächige Teile, insbesondere Verkleidungsteile, verwenden lässt. In besonders bevorzugter Verwendung wird das erfindungsgemäße Innenausbauteil in einem Kraftfahrzeug als Hutablage bzw. Gepäckablage verwendet. Es dient überdies als Dämmung, wenn die Hutablage über einem Motorraum für die Antriebseinheit des Kraftfahrzeugs angeordnet ist, wie dies insbesondere bei Kraftfahrzeugen mit Mittelmotor- oder Heckmotoranordnung gegeben ist, da bei derartigen Fahrzeugen der Motorraum unmittelbar an den Fahrzeuginnenraum angrenzt und eine Trennwand des Motorraums bei diesen Fahrzeugen einen Kofferraumboden bzw. eine Hutablage bilden kann. Durch die Verwendung eines Weichschaums für den gesamten Grundkörper weist das erfindungsgemäße Innenausbauteil auch eine ausreichende Geräuschdämmung auf und ist einfach herstellbar.

Für eine verbesserte Dämmung des Innenausbauteils wird nach Anspruch 2 ein viscoelastischer Weichschaum verwendet, da die viscoelastischen Eigenschaften eine effiziente Dissipation der eingetragenen Schwingungen ermöglichen.

Für eine gute Stabilität bzw. Steifigkeit des Grundkörpers bei besonders geringem Gewicht werden gemäß Anspruch 3 die Verstärkungseinsatzteile ebenfalls aus Schaumstoff hergestellt sein, wobei ein Schaumstoff gewählt wird, der gegenüber dem Weichschaum des Grundkörpers härter eingestellt ist. Dies kann vorzugsweise ein Polystyrol-Schaum sein, der auch unter der Bezeichnung Styropor® bekannt ist. Als Weichschaum für den Grundkörper kann insbesondere ein Polyurethan-Schaum verwendet werden.

Mit den in Anspruch 5 genannten Merkmalen wird die Möglichkeit des Biegens bzw. Knickens des Innenausbauteils vereinfacht, da zwischen den abgeschrägten Seitenflächen ein größerer Zwischenraum entsteht, in dem der Weichschaum des Grundkörpers angeordnet ist.

Ein besonders bevorzugtes Ausführungsbeispiel ist in Anspruch 6 angegeben, nach dem das zumindest eine Hintergriffselement an dem Grundkörper befestigt ist.

Um den Grundkörper weiter stabilisieren zu können, wird auf ihn - wie in Anspruch 7 angeführt - eine biegesteife Folie aufgebracht.

Nach einer besonders vorteilhaften Ausführungsform, die aus Anspruch 8 hervorgeht, steht die biegesteife Folie etwas über den Grundkörper mit zumindest einem Fortsatz über, so dass der Fortsatz das Hintergriffselement bilden kann.

Für eine sichere Befestigung ist gemäß Anspruch 9 das Hintergriffselement hakenförmig ausgeführt.

Wie Anspruch 10 beschreibt, wird das Innenausbauteil mit einer dekorativen Schicht versehen, insbesondere, wenn es als Innenverkleidungsteil für ein Kraftfahrzeug verwendet wird. Diese Dekorschicht ist dem Fahrzeuginnenraum zugewandt und wird entsprechend Anspruch 11 auf die biegesteife Folie aufgebracht, beispielsweise geklebt oder aufkaschiert. Selbstverständlich wäre auch eine so genannte Beflockung der biegesteifen Folie möglich.

Um das Innenausbauteil einfach und kostengünstig herstellen zu können, wird die biegesteife Folie auf den Grundkörper aufgeklebt (Anspruch 12). Dafür ist insbesondere vorgesehen, die biegesteife Folie zunächst mit der dekorativen Schicht zu versehen und anschließend auf den Grundkörper aufzukleben.

Die Erfindung wird nachfolgend anhand von Ausführungsbeispielen mit Bezug auf die Zeichnung näher erläutert. Es zeigen:
- Fig. 1: in einer perspektivischen Heckansicht ein Kraftfahrzeug mit einem Innenausbauteil und die
- Fig. 2-5: jeweils einen Schnitt durch das Innenausbauteil entlang der Linie II-II, III-III, IV-IV und V-V in Fig. 1.

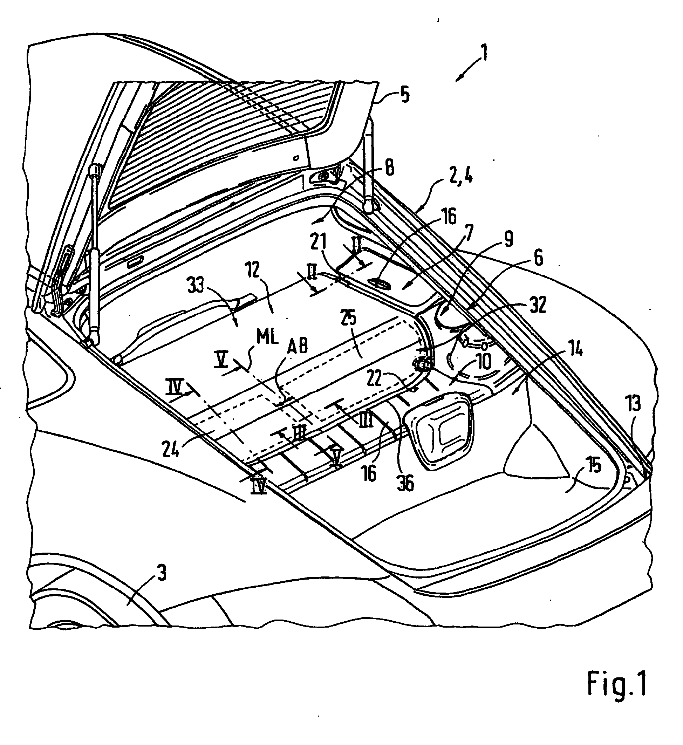

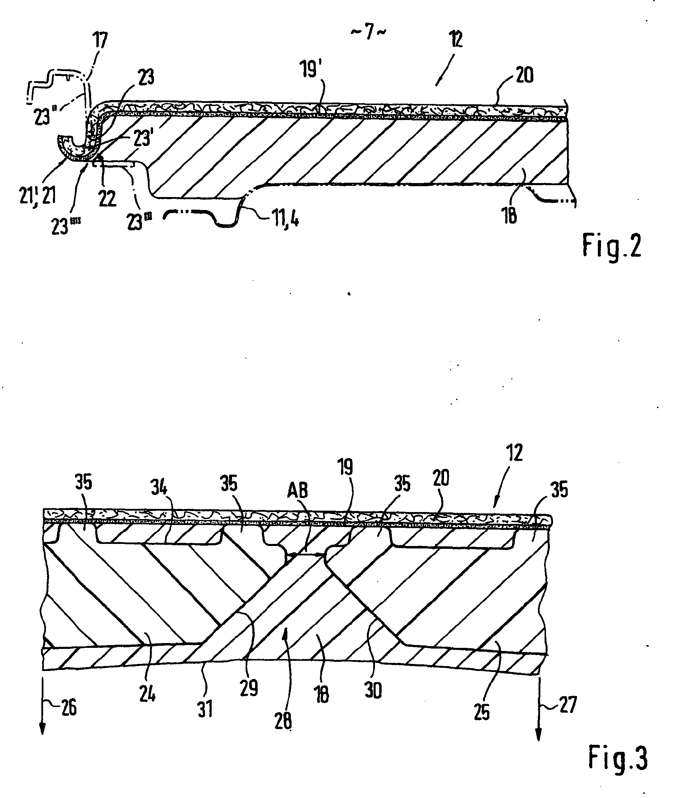

Fig. 1 zeigt ausschnittweise ein Kraftfahrzeug 1, insbesondere einen Personenkraftwagen, mit einem Fahrzeugaufbau 2, der von einem hier nicht näher dargestellten Fahrwerk mit Rädern 3 getragen wird. Der Fahrzeugaufbau 2 umfasst eine Karosserie 4 mit Anbauteilen, wie beispielsweise eine Heckklappe 5, die an der Karosserie 4 schwenkbar befestigt ist und eine Karosserieöffnung 6 verschließt oder - wie in Fig. 1 dargestellt - freigibt. Die Karosserie 4 umgibt einen durchgehenden Fahrzeuginnenraum 7, der hier einen Fahrgastraum 8 mit nicht dargestellten Sitzen und einen Gepäckraum 9 umfasst, welcher Gepäckraum 9 über die Karosserieöffnung 6 zugänglich ist. Der Gepäckraum 9 wird u.a. von einem verkleideten Gepäckraumboden 10 begrenzt, der Bestandteil der Karosserie 4 ist und der den Gepäckraum 9 von einem hier nicht zu sehenden Motorraum trennt, in dem die Antriebseinheit, umfassend einen Motor und ein Getriebe, des Kraftfahrzeugs 1 untergebracht ist. Die Antriebseinheit ist bei diesem Kraftfahrzeug 1 in so genannter Mittelmotoranordnung vorgesehen; alternativ wäre eine Heckmotoranordnung möglich. Damit - beispielsweise für Wartungsarbeiten - der Motorraum von oben her zugänglich ist, weist der Gepäckraumboden 10 eine abnehmbare Motorabdeckung 11 (siehe Fig. 2, 4 und 5) auf, die ein Öffnung in dem Gepäckraumboden 10 verschließt und die beispielsweise als Blechteil ausgeführt sein kann. Oberhalb der Motorabdeckung 11 ist auf dem Gepäckraumboden 10 ein Innenausbauteil 12 angeordnet, das mit einem vorderen Randabschnitt seines Umfangsrandes 22 unmittelbar an den Fahrgastraum 8 angrenzend angeordnet ist und somit eine Hutablage bilden kann. Das Innenausbauteil 12 kann als Wand in eine Ausnehmung bzw. Öffnung der Karosserie 4 eingesetzt sein oder eine Karosseriewand, hier den Gepäckraumboden 10 bzw. die Motorabdeckung 11, verkleiden. Im vorliegenden Ausführungsbeispiel bildet das Innenausbauteil 12 ein Innenverkleidungsteil des Fahrzeuginnenraums 7, insbesondere des Gepäckraums 9. In Richtung Fahrzeugheck 13 gesehen schließt sich über eine abfallende Stufe 14 ein weiterer Abschnitt 15 des Gepäckraumbodens 10 an, welcher Abschnitt 15 sich bis in den Heckbereich 13 erstrecken kann. Angrenzend an das Innenausbauteil 12 sind im gezeigten Ausführungsbeispiel weitere Innenverkleidungsteile 16, 17 einer Innenausstattung im Fahrzeuginnenraum 7 zugeordnet. Das Innenausbauteil 12 ist an der Karosserie 4 und/oder an der Innenausstattung, d.h. an zumindest einem Innenverkleidungsteil 16, 17 lösbar befestigt.

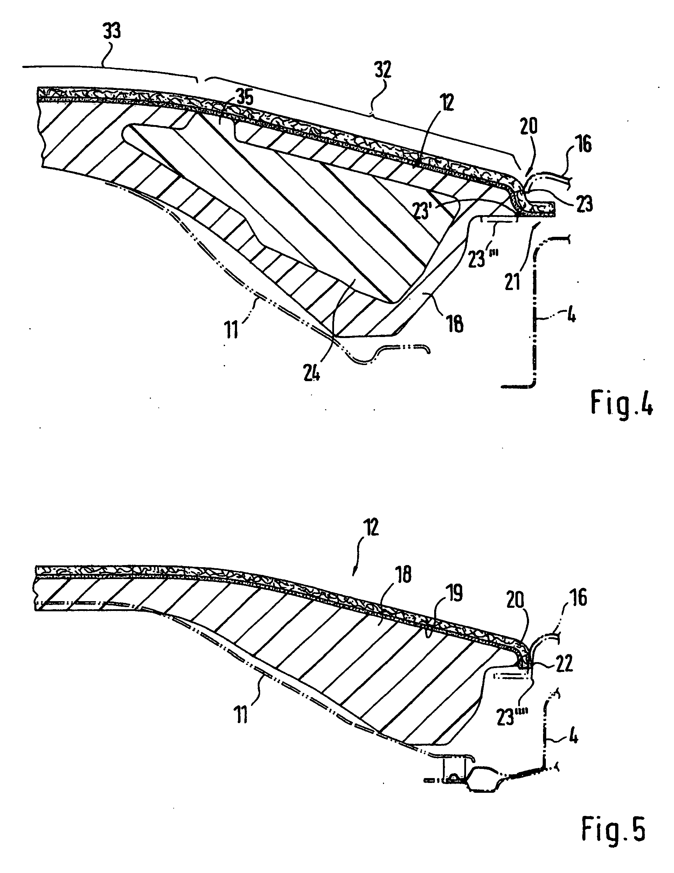

Anhand der Fig. 2 bis 5 wird das Innenausbauteil 12 aus Fig. 1 nachfolgend näher erläutert. Nach Fig. 2 weist das Innenausbauteil 12 einen Grundkörper 18 auf, der aus Schaumstoff aus einem Weichschaum hergestellt ist, wofür vorzugsweise ein Polyurethan-Schaum, kurz PUR-Schaum, vorgesehen ist, der beispielsweise eine Dichte von 60 + 10/ - 5 kg/m³ aufweist. Der Grundkörper 18 kann an seiner Unterseite 31, die der Motorraumabdeckung 11 zugewandt liegt, an die Kontur dieser Motorraumabdeckung 11 zumindest bereichsweise und annäherungsweise angepasst sein. An seiner Oberseite 19', die dem Fahrzeuginnenraum 7 zugewandt liegt, ist der Grundkörper 18 vorzugsweise vollflächig mit einer biegesteifen Folie 19 versehen, die auf den Grundkörper 18 aufgeklebt sein kann. Diese biegesteife Folie 19 ist vorzugsweise als EPDM-Schwerfolie ausgeführt und kann an ihrer dem Fahrzeuginnenraum 7 zugewandten Seite mit einer Dekorschicht 20 versehen sein, die beispielsweise als Teppich, Beflockung, Bezug oder ähnliches ausgeführt ist. Wie aus Fig. 2 hervorgeht, steht die biegesteife Folie 19 mit zumindest einem streifenförmigen Fortsatz 21 über den Umfangsrand 22 des Grundkörpers 18 über. Über den Umfangsrand verteilt können mehrere Fortsätze 21 vorgesehen sein, die Befestigungselemente einer Befestigungseinrichtung für das Innenausbauteil 12 an dem Kraftfahrzeug 1 bzw. an den angrenzenden Innenausstattungsteilen 16 bzw. 17 bilden. Der Fortsatz 21 unter- bzw. hintergreift einen Rand 23 des jeweiligen Innenausstattungsteil 16 bzw. 17. Der Fortsatz 21 geht von dem Grundkörper 18 aus und ist insbesondere daran befestigt. Die Fortsätze 21 der Befestigungseinrichtung bilden Hintergriffselemente 21', die das jeweilige Innenverkleidungsteil 16 bzw. 17 hintergreifen und hakenförmig ausgestaltet sein können. Alternativ könnten die Fortsätze 21 an der Karosserie 4, beispielsweise einer Karosseriewand, angreifen. In Fig. 2 ist das Hintergriffselement mit dem Fortsatz 21 - im Querschnitt gesehen - hakenförmig realisiert. Bei dem Fortsatz 21 gemäß Fig. 4 läuft der Fortsatz 21 gerade aus und untergreift den Umfangsrand 23 des Innenverkleidungsteils 16. Der Rand 23 kann ein Begrenzungsrand des jeweiligen Innenverkleidungsteils 16 bzw. 17 sein. Alternativ könnte der Rand 23 ein Umfangsrand eines Durchbruchs 23' in dem Innenverkleidungsteil 16 bzw. 17 sein, in welchen der Fortsatz 21 diesen Durchbruch durchgreifend eingehängt wird. Vorzugsweise ist der Durchbruch 23' in einen ersten Wandabschnitt 23" des Innenverkleidungsteils 16 bzw. 17 eingebracht. An den ersten Wandabschnitt 23" schließt sich ein zweiter Wandabschnitt 23"' an, der sich unter den Grundkörper 18 erstreckt. Beim Befestigen des Innenausbauteils kann der Fortsatz 21 auf diesem zweiten Wandabschnitt 23'" gleiten und durch den Durchbruch 23' hindurchgeführt werden. Der Durchbruch 23' kann sich bis in einen Eckbereich 23"" zwischen erstem und zweitem Wandabschnitt 23" und 23'" erstrecken. In analoger Weise kann dies gelten, wenn der Fortsatz 21 mit der Karosserie 4 bzw. einer Karosseriewand in Eingriff gebracht werden soll.

In den Grundkörper 18 sind zumindest zwei Verstärkungseinsatzteile 24 und 25 eingesetzt, die beispielsweise durch Umschäumen mit dem Weichschaum des Grundkörpers 18 innerhalb des Grundkörpers angeordnet werden können. Die beiden Verstärkungseinsatzteile 24 und 25 liegen - wie aus Fig. 1 und 3 hervorgeht - mit Abstand AB zueinander, wodurch der aus dem biegbaren Weichschaum hergestellte Grundkörper 18 um eine Biegelinie, hier eine Mittellängsachse ML, die mit der Schnittlinie V-V zusammenfällt, entsprechend Pfeilrichtung 26 und 27 gebogen bzw. geknickt werden kann, so dass die die Hintergriffselemente 21' bildenden Fortsätze 21 unter dem jeweiligen Rand 23 des benachbarten Verkleidungsteils 16 bzw. 17 eingebracht bzw. eingehängt werden können. Durch den Abstand AB der beiden Verstärkungseinsatzteile 24 und 25 liegt zwischen den Verstärkungsverkleidungsteilen 24 und 25 ein Zwischenraum 28 vor, der mit dem Weichschaum des Grundkörpers 18 gefüllt ist. Wie aus Fig. 3 noch ersichtlich, sind die einander zugewandten Seitenflächen 29 und 30 der beiden Verstärkungseinsatzteile 24 und 25 derart abgeschrägt ausgeführt, dass sich der Zwischenraum 28 in Richtung Unterseite 31 des Grundkörpers erweitert, wodurch ein größerer Biege- bzw. Knickwinkel um die Mittellängsachse ML für den Grundkörper 18 bzw. das Innenausbauteil 12 bereitgestellt wird. Die Verstärkungseinsatzteile 24 und 25 sind aus einem Material hergestellt, das gegenüber dem Weichschaum des Grundkörpers 18 härter ausgeführt ist. Insbesondere sind die Verstärkungseinsatzteile 24 und 25 ebenfalls aus Schaumstoff hergestellt, wobei vorzugsweise ein Polystyrol-Schaum, kurz EPS-Schaum, verwendet wird, der insbesondere eine Dichte von 30 +/- 10 kg/m³ aufweist.

Wie aus Fig. 1 hervorgeht, erstrecken sich die Verstärkungseinsatzteile 24 und 25 im Wesentlichen über die gesamte Breite, jedoch nur über eine Teillänge des Innenausbauteils 12. Im Querschnitt gesehen sind die Verstärkungseinsatzteile 24 und 25 etwa keilförmig ausgeführt, wobei die Keilform (Fig. 4) so orientiert ist, dass der Querschnitt der Verstärkungseinsatzteile 24 bzw. 25 in Richtung des Verkleidungsteils 16 hin zunimmt. So geht weiter aus Fig. 4 hervor, dass in einem abfallenden Endbereich 32, der benachbart zum Verkleidungsteil 16 liegt, das Innenausbauteil 12 mit dem Grundkörper 18 eine wesentlich größere Materialdicke aufweist, als in einem vorgeordneten, etwa waagerecht verlaufenden Abschnitt 33 des Innenausbauteils 12. Die Verstärkungseinsatzteile 24 und 25 befinden sich vorzugsweise in dem Endbereich 32. Außerdem weisen sie - wie in Fig. 3 und 4 dargestellt - an ihrer der Folie 19 zugewandten Oberseite 34 ein oder mehrere Erhebungen 35 auf, auf denen die Folie 19 aufliegt. Diese Erhebungen können noppenartig bzw. punktförmig, streifenförmig, kreisförmig oder ähnlich ausgeführt sein.

Wie Fig. 5 zeigt, liegt in den übrigen Bereichen des Umfangsrandes 22 des Innenausbauteils die Dekorschicht 20 an dem benachbarten Verkleidungsteil 16 an, und zwar in den Bereichen, die ohne die Fortsätze 21 ausgeführt sind. Die streifenförmigen Fortsätze 21 können - wie in den Fig. 2 und 4 dargestellt - die entsprechenden Verkleidungsteile 16 und 17 in den Durchbrüchen 23' durchgreifen, wodurch der Hintergriff für die Befestigung des Innenausbauteils 12 an den entsprechenden Verkleidungsteilen 16 und 17 gegeben ist. Es ist weiter ersichtlich, dass die Dekorschicht 20 auch auf den Fortsätzen 21 angebracht sein kann, wodurch eine gewisse Geräuschdämpfung erzielt wird, da die Folie 19 und die Verkleidungsteile 17 nicht unmittelbar aufeinander liegen. Es ist im Übrigen auch zu sehen, dass der Weichschaum des Grundkörpers 18 im Bereich der Fortsätze 21 ausgespart ist.

## Patentansprüche

1. Innenausbauteil (12), insbesondere Innenverkleidungsteil, für ein Kraftfahrzeug (1), mit einem einen Schaumstoff aufweisenden Grundkörper (18) und mit zumindest einem Verstärkungseinsatzteil (24, 25), das innerhalb des Grundkörpers (18) angeordnet ist, **dadurch gekennzeichnet, dass** der Schaumstoff des Grundkörpers (18) ein biegbares Weichschaumteil umfasst, dass der gesamte Grundkörper (18) als Weichschaumteil ausgeführt ist, dass zumindest zwei mit Abstand (AB) zueinander liegenden Verstärkungseinsatzteile (24, 25) innerhalb des Grundkörpers (18) angeordnet sind, die sich im Wesentlichen über die gesamte Breite jedoch nur über eine Teillänge des Innenausbaüteils (12) erstrecken, und dass das Innenausbauteil (12) zumindest ein Hintergriffselement (21') für seine Befestigung an dem Kraftfahrzeug (1) besitzt.

2. Innenausbauteil nach Anspruch 1, **dadurch gekennzeichnet, dass** das Weichschaumteil aus einem viscoelastischen Weichschaum, insbesondere Polyurethan-Schaum, hergestellt ist.

3. Innenausbauteil nach Anspruch 1, **dadurch gekennzeichnet, dass** die Verstärkungseinsatzteile (24, 25) aus gegenüber dem Schaumstoff des Grundkörpers (18) härteren Schaumstoff realisiert sind.

4. Innenausbauteil nach Anspruch 3, **dadurch gekennzeichnet, dass** die Verstärkungseinsatzteile (24, 25) aus einem Polystyrol-Schaum hergestellt sind.

5. Innenausbauteil nach Anspruch 1 oder 3, **dadurch gekennzeichnet, dass** die Verstärkungseinsatzteile (24, 25) an ihren einander zugewandten Seitenflächen (29, 30) abgeschrägt sind.

6. Innenausbauteil nach Anspruch 1, **dadurch gekennzeichnet, dass** das Hintergriffselement (21') an dem Grundkörper (18) befestigt ist.

7. Innenausbauteil nach Anspruch 1, **dadurch gekennzeichnet, dass** auf den Grundkörper (18) zumindest bereichsweise eine biegesteife Folie (19) aufgebracht ist.

8. Innenausbauteil nach Anspruch 7, **dadurch gekennzeichnet, dass** die biegesteife Folie (19) über den Grundkörper (18) mit zumindest einem Fortsatz (21) übersteht, der das Hintergriffselement (21') bildet.

9. Innenausbauteil nach einem der vorhergehenden Ansprüche 1, 6 oder 8, **dadurch gekennzeichnet, dass** das Hintergriffselement (21') hakenförmig oder gerade ausgeführt ist.

10. Innenausbauteil nach Anspruch 1, **dadurch gekennzeichnet, dass** es an einer einem Fahrzeuginnenraum (7) zugewandten Verkleidungsseite (Oberseite 19') mit einer dekorativen Schicht (20) versehen ist.

11. Innenausbauteil nach einem der vorhergehenden Ansprüche 7, 8 oder 10, **dadurch gekennzeichnet, dass** die dekorative Schicht (20) auf der biegesteifen Folie (19) angebracht ist.

12. Innenausbauteil nach Anspruch 7, **dadurch gekennzeichnet, dass** die biegesteife Folie (19) auf den Grundkörper (18) aufgeklebt ist.

## Claims

1. Interior finishing component (12), in particular interior panelling part, for a motor vehicle (1), with a basic body (18) having a foam material and with at least one reinforcing insert (24, 25) which is arranged within the basic body (18), **characterized in that** the foam material of the basic body (18) comprises a flexible soft foam part, **in that** the entire basic body (18) is designed as a soft foam part, **in that** at least two reinforcing inserts (24, 25) which are situated at a distance (AB) from each other are arranged within the basic body (18), which inserts extend substantially over the entire width but only over a partial length of the interior finishing component (12), and **in that** the interior finishing component (12) has at least one engage-behind element (21') for its fastening to the motor vehicle (1).

2. Interior finishing component according to Claim 1, **characterized in that** the soft foam part is produced from a visco-elastic soft foam, in particular polyurethane foam.

3. Interior finishing component according to Claim 1, **characterized in that** the reinforcing inserts (24, 25) are realized of a foam material which is harder than the foam material of the basic body (18).

4. Interior finishing component according to Claim 3, **characterized in that** the reinforcing inserts (24, 25) are produced from a polystyrene foam.

5. Interior finishing component according to Claim 1 or 3, **characterized in that** the reinforcing inserts (24, 25) are bevelled on their mutually facing side surfaces (29, 30).

6. Interior finishing component according to Claim 1, **characterized in that** the engage-behind element (21') is fastened to the basic body (18).

7. Interior finishing component according to Claim 1, **characterized in that** a flexurally stiff film (19) is applied to the basic body (18) at least in some regions.

8. Interior finishing component according to Claim 7, **characterized in that** the flexurally stiff film (19) protrudes over the basic body (18) with at least one extension (21) which forms the engage-behind element (21').

9. Interior finishing component according to one of the preceding Claims 1, 6 or 8, **characterized in that** the engage-behind element (21') is of hook-shaped or rectilinear design.

10. Interior finishing component according to Claim 1, **characterized in that** it is provided with a decorative layer (20) on a panelling side (upper side 19') facing a vehicle interior (7).

11. Interior finishing component according to one of the preceding Claims 7, 8 or 10, **characterized in that** the decorative layer (20) is fixed on the flexurally stiff film (19).

12. Interior finishing component according to Claim 7, **characterized in that** the flexurally stiff film (19) is adhesively bonded onto the basic body (18).

## Revendications

1. Élément de revêtement intérieur (12), notamment élément de garniture intérieure, pour un véhicule automobile (1), avec un corps de base (18) comportant un produit alvéolaire et avec au moins un élément de garniture de renfort (24, 25) disposé à l'intérieur du corps de base (18), **caractérisé en ce que** le produit alvéolaire du corps de base (18) comprend une partie de mousse souple flexible, que l'ensemble du corps de base (18) prend la forme d'une pièce alvéolaire souple, qu'au moins deux éléments de garniture de renfort (24, 25) reposant à une certaine distance (AB) l'un de l'autre sont disposés à l'intérieur du corps de base (18), lesdits éléments s'étendant pour l'essentiel sur l'ensemble de la largeur, toutefois sur une partie seulement de la longueur de l'élément de revêtement intérieur (12), et **en ce que** l'élément de revêtement intérieur (12) possède au moins un élément de prise arrière (21') pour sa fixation au véhicule automobile (1).

2. Élément de revêtement intérieur selon la revendication 1, **caractérisé en ce que** l'élément alvéolaire souple est fabriqué à partir d'une mousse souple viscoélastique, notamment une mousse de polyuréthane.

3. Élément de revêtement intérieur selon la revendication 1, **caractérisé en ce que** les éléments de garniture de renfort (24, 25) sont réalisés à partir d'un produit alvéolaire plus dur que le produit alvéolaire du corps de base (18).

4. Élément de revêtement intérieur selon la revendication 3, **caractérisé en ce que** les éléments de garniture de renfort (24, 25) sont fabriqués à partir d'une mousse de polystyrène.

5. Élément de revêtement intérieur selon la revendication 1 ou 3, **caractérisé en ce que** les éléments de garniture de renfort (24, 25) sont biseautés au niveau de leurs surfaces latérales (29, 30) orientées l'une vers l'autre.

6. Élément de revêtement intérieur selon la revendication 1, **caractérisé en ce que** l'élément de prise arrière (21') est fixé au corps de base (18).

7. Élément de revêtement intérieur selon la revendication 1, **caractérisé en ce qu'**un film (19) résistant à la flexion est appliqué sur le corps de base (18) au moins sur certaines zones.

8. Élément de revêtement intérieur selon la revendication 7, **caractérisé en ce que** le film (19) résistant à la flexion ressort au-dessus du corps de base (18) avec au moins une saillie (21) qui forme l'élément de prise arrière (21').

9. Élément de revêtement intérieur selon l'une quelconque des revendications 1, 6 ou 8, **caractérisé en ce que** l'élément de prise arrière (21') est réalisé de façon droite ou en forme de crochet.

10. Élément de revêtement intérieur selon la revendication 1, **caractérisé en ce que** cet élément est pourvu d'une couche décorative (20) au niveau d'un côté de garniture (côté supérieur 19') de l'habitacle d'un véhicule (7).

11. Élément de revêtement intérieur selon l'une quelconque des revendications 7, 8 ou 10, **caractérisé en ce que** la couche décorative (20) est appliquée sur le film (19) résistant à la flexion.

12. Élément de revêtement intérieur selon la revendication 7, **caractérisé en ce que** le film (19) résistant à la flexion est collé sur le corps de base (18).
